# EUROPEAN PATENT APPLICATION

(11) **EP 2 568 767 A1**
(43) Date of publication of application: **13.03.2013**
(21) Application number: 12187258.4
(22) Date of filing: 12.09.2008
(51) Int. Cl.: H04W 92/20, H04L 12/801

(54) **Communication system and method for wirelessly exchanging user data with a user terminal**

(62) Divisional of application: 08016082.3
(71) Applicant: Koninklijke KPN N.V., 2516 CK The Hague (NL); Nederlandse Organisatie voor Toegepast -Natuurwetenschappelijk Onderzoek TNO, 2628 VK Delft (NL)
(72) Inventor: van der Wal, Jacob, 2613 VE Delft (NL); Jorguseski, Ljupco, 2282 TR Rijswijk (NL); Gustafsson, Stefan, 2521 DT The Hague (NL)
(74) Representative: Wuyts, Koenraad Maria

(57) **Abstract**

The invention relates to a communication system comprising a first wireless access station with a first data connection for transferring user data and a second wireless access station with a second data connection for transferring user data. The first wireless access station and second wireless access station are located at distant positions from each other. The first wireless access station comprises one or more antennas for wirelessly transmitting user data, that are received over the first data connection, to a user terminal. The second wireless access station is configured to receive user data over the second data connection and to transmit the user data directly to the first wireless access station for transmission to the user terminal. The communication system further comprises a controller configured for controlling at least a part of the user data for the user terminal to flow over the second data connection.

## Description

### FIELD OF THE INVENTION

The invention relates to the field of wireless communication systems. In particular, the invention relates to a communication system and method of wirelessly exchanging user data with a user terminal.

### BACKGROUND OF THE INVENTION

Wireless communication systems enable wireless exchange of user data between a wireless access station (also referred to as base station) and a user terminal. The user terminal may be a mobile user terminal accessing the wireless communication system for receiving user data from and transmitting user data to the base station.

Wireless communication systems typically comprise a radio access network and a core network. For UMTS communication systems, details are provided in 3GGP 23.002.

Generally, for a UMTS radio access network, the base station is referred to as Node-B. The Node-B provides wireless access for a user terminal (also referred to as user equipment UE) to the core network by defining and supporting one or more cells. The interface between the UE and Node-B is typically referred to as the Uu-interface. While the total transmission capacity of a UMTS cell is typically 2 Mbps, a UE is normally assigned a constrained capacity of e.g. 384 kbps.

The radio access network also comprises a Radio Network Controller (RNC) interconnecting one or more Node-Bs to the core network. The interface between a Node-B and the RNC is referred to as the Iub interface. Data transport over the Iub interface may be realized as a wired system (twisted pair copper, UTP, coaxial cables, optical fibres) or a wirelessly (radio signals, free space optics). Conventional UMTS systems use E1 data connections with a data transmission capacity of 2Mbps. Higher data transmission capacities may be obtained by using multiple E1 data connections or using E3 data connections (34 Mbps) or STM-1 data connections (150 Mbps). The data transmission capacity of the data connections is, in view of the costs, tailored to data transmission capacity of the Uu interface and the expected data traffic for the Node-B. For a Node-B providing multiple cells, a statistical multiplexing gain is typically achieved by providing a lower data transmission capacity for the Iub interface than the sum of the data transmission capacities of the Uu interfaces of the respective cells.

In view of the ever increasing requirements for high rate data traffic between a (mobile) user terminal and a communication system, techniques have recently been developed to increase the maximum data transmission capacity of the Uu interface. High Speed Downlink Packet Access (HSDPA) enables maximum bitrates of 3.6 Mbps (and up to 14.4 Mbps) for a cell. Future systems, known as LTE (Long Term Evolution, also referred to as 4G) communication systems, aim at peak bit rates of at least 100 Mbps for a cell.

The user data traffic from the core network should be transferred via the Iub to the Node-B and via the Uu to the UE (downlink). Therefore, the increased data transmission capacity for the Uu interface may encounter a bottleneck at the Iub interface as a result of the restricted data transfer capacity for the data connections of the Node-Bs.

It should be noted that a RNC is not always required in the communication system. For LTE (Long Term Evolution, also referred to as 4G) communication systems, the eNBs (E-UTRAN Node-Bs) are connected via data connections and IP network to the core network. The same is true for WiMAX communication systems. However, the above problem for the data connections of wireless access stations are also encountered for such communication systems.

### SUMMARY OF THE INVENTION

It is an object of the invention to provide a communication system and method for receiving and/or transmitting user data from and/or to a user terminal, wherein the data transmission capacity of the Iub interface, or a corresponding interface in a different communication systems, is likely to be sufficient to meet the data transmission capacity for the Uu interface.

An aspect of the present invention is a communication system comprising a first wireless access station with a first data connection for transferring user data and a second wireless access station with a second data connection for transferring user data. The first wireless access station (receptor) and second wireless access station (donor) are located at distant positions from each other. The first wireless access station comprises one or more antennas for wirelessly transmitting user data, that are received over the first data connection, to a user terminal. The second wireless access station is configured to receive user data over the second data connection and to transmit the user data directly to the first wireless access station for transmission to the user terminal. The communication system further comprises a controller configured for controlling at least a part of the user data for the user terminal (and thus for the first wireless access station) to flow over the second data connection.

Another aspect of the present invention is a wireless access station comprising one or more antennas for wirelessly transmitting user data to a user terminal. The wireless access station comprises a receiving module arranged for receiving at least a part of the user data directly from a further wireless access station. Such a wireless access station may be indicated as a receptor station, e.g. a receptor node-B.

Still another aspect of the present invention is a wireless access station being configured to receive user data and further user data over a data connection. The wireless access station comprises a transmitter configured for directly transmitting the user data to a further wireless access station and one or more antennas for wirelessly transmitting the further user data to a user terminal. Such a wireless access station may be indicated as a donor-station, e.g. a donor Node-B.

Yet another aspect of the present invention involves a controller for use in a communication system comprising a first wireless access station with a first data connection for transferring user data and a second wireless access station with a second data connection for transferring user data. The first wireless access station and second wireless access station are located at distant positions from each other. The first wireless access station comprises one or more antennas for wirelessly transmitting user data, that are received over the first data connection, to a user terminal. The second wireless access station is configured to receive user data over the second data connection and to transmit the user data directly to the first wireless access station for transmission to the user terminal. The controller is configured for controlling at least a part of the user data for the user terminal (and thus for the first wireless access station) to flow over the second data connection.

A yet further aspect of the present invention involves a method of transmitting user data to a user terminal in a communication system comprising a first wireless access station with a first data connection for transferring user data and a second wireless access station with a second data connection for transferring user data. The first wireless access station and second wireless access station are located at distant positions from each other. At least a part of said user data is received over the second data connection at the second wireless access station. The second wireless access station transmits the at least part of the user data to the first wireless access station. The first wireless access station transmits the at least part of the user data to the user terminal.

By providing direct transmission capacity between the wireless access stations, the total Iub transmission capacity of a wireless access station increases by the data connections of multiple wireless access stations becoming available. Consequently, high bit rate user data on the Uu interface can be distributed over two or more Iub interfaces of different wireless access stations to transfer the user data to and from the core network without a need for increasing the data transmission capacity of the data connections of the individual wireless access stations.

It should be appreciated that only a part of the data transmission capacity of the second data connection may be made available for user data destined for the first wireless access station, in order for the second wireless access station to guarantee data transmission capacity for user terminal(s) in its own cell(s).

It should be appreciated that apart from user data, other data, such as control data, may also be transferred as described above.

It should be noted that the second wireless access station may provide the user data directly to the first wireless access station via an intermediate station (a relay station). The intermediate station may or may not be able to communicate with user terminals. Such an intermediate station may also be useful for improving interference conditions.

While in the above aspects of the invention, the user data may be fully transmitted by the first wireless access station to the user terminal via the second data connection of the second wireless access station and the interconnection between the second and first wireless access station, the embodiment of claim 2 enables user data to be distributed over both the first data connection of the first wireless access station and the second data connection of the second wireless access device, thereby increasing the total transmission capacity for data from the core network to the first wireless access station.

The embodiment of claim 3 enables monitoring of the congestion status of the first data connection and to route user data over the second data connection if a particular data traffic threshold is exceeded on the first data connection. The embodiment of claim 4 enables monitoring of the second data connection, in order to determine whether sufficient data transmission capacity is available on the second data connection. If not, another data connection (e.g. of a third wireless access station capable of communicating directly with the first wireless access station) should be found with sufficient data transmission capacity.

The embodiment of claim 5 defines a system wherein only some (high capacity) data connections of corresponding wireless access stations are available for transferring data destined for other wireless access stations. Wireless access stations located further away from a wireless access station with a high capacity data connection may communicate with this wireless access station using one or more intermediate stations. Such an embodiment facilitates routing control of the user data. Of course, the uni-directionality for transmitting user data does not necessarily hold for some of the control data, e.g. power information signals and acknowledgement signals.

Although the direct transmission capacity between the first and second wireless access stations may be provided by a wired system, wireless transfer as defined in claim 6 is preferred from a cost and ease-of-implementation perspective. The embodiment of claim 7 proposes to use the already existing antennas and/or transmitters for data exchange with the user terminal also for exchange of the user data between the first and second wireless access stations.

Of course, the communication system should be arranged such that the wireless transfer of user data between the first and second wireless access station does not (significantly) disturb radio traffic within the cell(s) of the first and second wireless access stations (interference). The embodiments of claims 8-13 provide measures for reducing interference of the user data traffic between the interconnected access stations and the data traffic of each of the access stations with the user terminal(s) within the respective cell(s). Interference should particularly be taken care of in a system wherein the first and second wireless access stations use the same frequency band(s). The frequency band is frequency spectrum used for the data transfer.

The embodiment of claim 8 provides an increased sensitivity for the first wireless access station, thereby allowing a reduced transmission power for transmitting the user data from the second wireless access station to the first wireless access station (or a higher path loss).

The various sets of subcarriers for the interconnection data traffic and the data traffic within the cell in claim 9 considerably reduce interference, thereby improving the data transmission capacity of the Uu interface. The embodiment of claim 10 enables dynamically varying the amount of subcarriers available for interconnection data traffic in dependence of the (expected) transmission capacity requirements. Of course, the communication system may comprise a plurality of wireless access stations, some or all of them being directly interconnected for user data exchange as described above. In order to reduce interference of the various interconnections, different sets of subcarriers (or different frequencies) may be used for the respective interconnections as defined in claim 11.

Interference may also be reduced or eliminated by using different frequencies (e.g. an uplink frequency band for downlink traffic) or time multiplexing as defined in claims 12 and 13, respectively. It should be appreciated that the alternation of time intervals does not necessarily imply the time intervals to succeed without an intermediate time gap.

The embodiment of claim 14 defines a UMTS communication system. The user data to be provided to the user terminal by the first wireless access station passes the RNC and, therefore, the RNC is a suitable location for controlling (and monitoring) the data traffic over the first and second data connections.

As mentioned previously, some communication systems do not comprise a RNC. In such systems, the controller may be provided in the wireless access stations as defined in claim 15, in particular for monitoring the congestion status of the data connections for the respective wireless access stations. For downlink traffic, the access network may e.g. comprise a GGSN-like module for routing the data traffic by setting up data tunnels with one or more eNBs.

The embodiment of claim 16 provides the advantage that for optimal routing decisions for the user data, the transmission capacity of the wireless access station to transfer the user data to the user terminal (Uu interface) is available.

The embodiment of claim 17 defines a communication system wherein the data transmission capacity of the individual data connections is constrained.

The data transmission capacity on the Uu interface for data traffic from the wireless access station to the user terminal (downlink) is typically higher than for the uplink. However, as defined in claim 18, the communication system and method are also suitable for uplink data traffic. For uplink data traffic, a controller is provided at the Node-B (the receptor Node-B) in order to direct the data traffic to a neighbouring Node-B (a donor Node-B). It should be appreciated that the present invention may be used for downlink and uplink data traffic in combination, but also for downlink traffic and uplink traffic as such.

By providing the direct interconnection between the first and second wireless access station, other information, such as handover data, may also be transmitted over the interconnection as defined in claim 19. The direct interconnection may also avoid signal delay as compared to the situation wherein signals should be transferred indirectly between the wireless access stations via the RNC or other controller.

In order for a wireless direct interconnection to achieve an appropriate bit rate, it is not desirable for the distance between the wireless access stations to exceed the distance as defined in claim 20. As described previously, an intermediate station may be provided to allow the distance between Node-Bs to increase and to improve the interference conditions.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIGS. 1A and 1B schematically illustrate communication systems in accordance with embodiments of the invention;
FIG. 2 depicts a detail of the embodiment of FIG. 1A;
FIG. 3 is a schematic illustration of a wireless access station according to an embodiment of the invention; and
FIGS. 4 and 5 illustrate an embodiment of the invention for a orthogonal frequency division multiplex (OFDM) communication system.

### DETAILED DESCRIPTION OF THE DRAWINGS

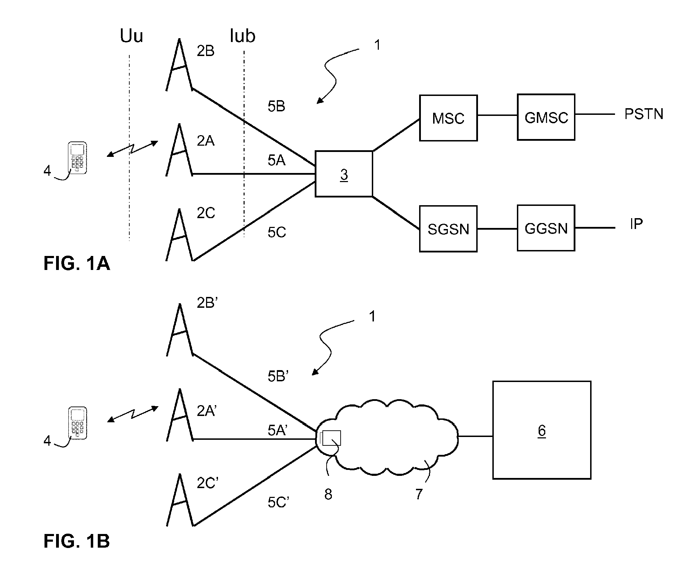

FIG. 1A is a schematic illustration of a UMTS communication system 1. UMTS communication system 1 comprises a radio access network having a plurality of wireless access stations 2A, 2B, 2C and a radio network controller 3. Below, the wireless access stations 2A-2C are referred to as Node-Bs, whereas controller 3 is abbreviated as RNC (radio network controller) for the system of FIG. 1A.

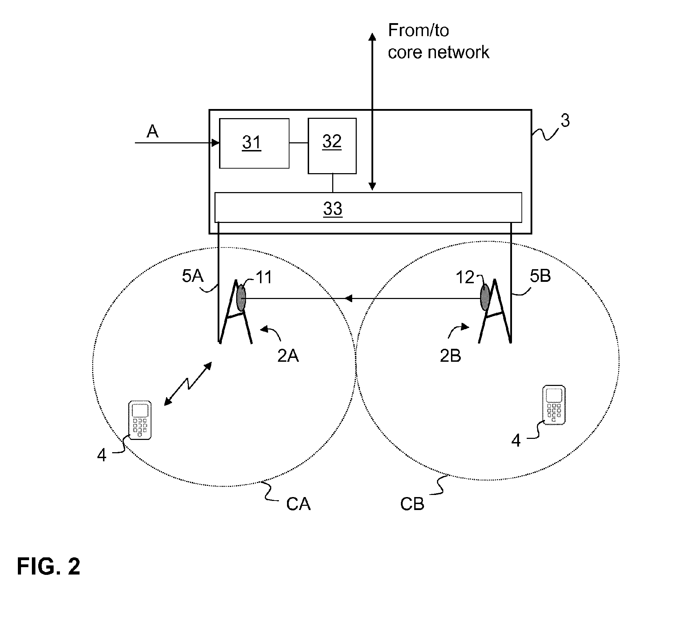

The Node-Bs 2A-2C provide wireless access for a user terminal 4 (also referred to as user equipment UE) by defining and supporting one or more cells (see FIG. 2). The radio interface between the UE 4 and Node-B 2A is referred to as the Uu-interface.

Each Node-B 2A-2C has a corresponding data connection 5A-5C to the RNC 3 of the radio access network. The interface between a Node-B and the RNC is referred to as the Iub interface. The data connection 5A-5C may comprise one or more connections (wired and/or wireless) with a constrained data transmission capacity. Data transport over the Iub interface may be realized by a wired system (twisted pair copper, UTP, coaxial cables, optical fibres) or a wirelessly (radio signals, free space optics). The data connections 5A-5C may e.g. be E1 data connections with a data transmission capacity of 2Mbps. Higher data transmission capacities may be obtained by using multiple E1 data connections or using E3 data connections (34 Mbps) or STM-1 data connections (150 Mbps). Data connections 5A-5C may be (partly) copper wired and provided with a DSLAM using e.g. VDSL modems.

RNC 3 connects Node-Bs 2A-2C to the core network. The core network is configured for transferring user data either via a MSC and a GMSC to e.g. a PSTN network or via an SMSC and a GGSN to e.g. an IP network.

In operation, user data may be provided from the core network, via the RNC 3 and Node-B 2A to the user terminal 4 (downlink communication), assuming that user terminal is in one of the cells of Node-B 2A. User data may also be provided by the user terminal 4 to the Node-B 2A and then via RNC 3 to the core network (uplink communication).

Other communication systems, such as system 1' schematically depicted in FIG. 1B, may not have a RNC. An IP network 7, or other network, is provided between the wireless access stations 2A' - 2C' and the core network 6. Network 7 may comprise a controller 8 configured for performing steps according to an embodiment of the invention by controlling the flow of user data over data connections 5A'-5C' associated with wireless access stations 2A'-2C'. The controller 8 may be a GGSN-like module that may set up data tunnels with the wireless access stations 2A'-2C'. Examples of such communication systems include Long Term Evolution (LTE, also referred to as '4G') communication systems or WiMAX communication systems. In LTE systems, wireless access stations 2A'-2C' are referred to as eNBs.

Embodiments of the invention will now be explained with reference to FIGS. 2-5 with regard to the communication system 1 of FIG. 1A for downlink communication. It should be appreciated however, the embodiments are, *mutatis mutandis,* suitable for uplink communication, either in isolation or in addition to downlink communication.

FIG. 2 shows the communication system 1 comprising Node-B 2A with a first data connection 5A for transferring at least user data and a Node-B 2B with a second data connection 5B for transferring at least user data. Node-B 2A defines one or more cells CA and Node-B 2B defines one or more cells CB. Node 2A and Node 2B are located at distant positions from each other of a few kilometres, e.g. at a distance of 3 kilometres.

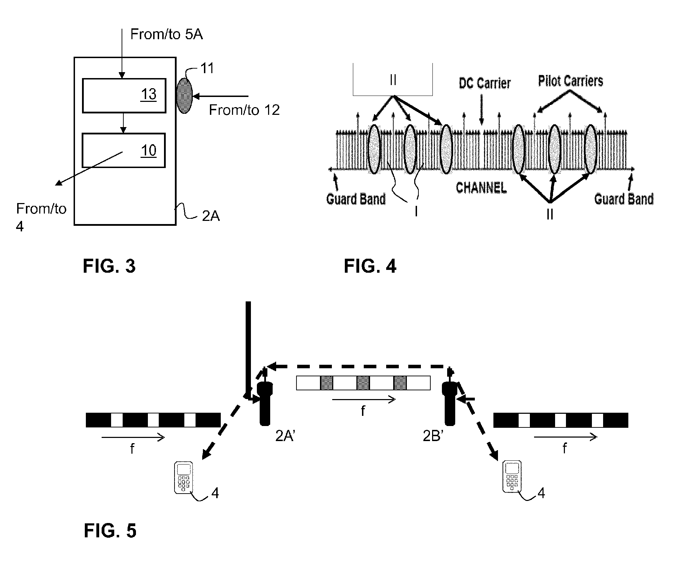

Node-B 2A comprises one or more antennas 10 (FIG. 3) for wirelessly transmitting user data to the user terminal 4 within cell CA received over the data connection 5A. Node-B 2A also comprises a receiver unit 11 configured for receiving user data from Node-B 2B. Node-B 2B may also receive user data over data connection 5B and comprises a transmitter 12 for transmitting the user data directly to receiver unit 11 of Node-B 2A. Node-B 2A may subsequently transmit these user data to user terminal 4 within cell CA. It should be noted that transmitter 12 may preferably also be used for transmitting user data to user terminals 4 within cell CB.

Communication system 1 comprises RNC 3 connected to data connections 5A, 5B. Generally, RNC 3 will steer user data for user terminal 4 in cell CA over data connection 4A. According to an embodiment, RNC 3 is programmed to control that at least part of the user data for user terminal 4 in cell CA is routed over the data connection 5B of Node-B 2B (i.e. at least some data transmission capacity of data connection 5B of Node-B 2B is donated to Node-B 2A). If partial transmission of user data is possible over data connection 5A, additional user data may be routed over data connection 5B and the interconnection between Node-B 2B and Node-B 2A (possibly using transmitter 12 and receiver unit 11). The user data are merged in Node-B 2A, using merger 13 (see FIG. 3), and provided to user terminal 4 in cell CA using antenna 10. In an extreme case, when transmission of the user data for user terminal 4 in cell CA is not possible over data connection 5A (no data transmission capacity), all user data may be provided to user terminal 4 in cell CA via data connection 5B and the interconnection between Node-B 2B and Node-B 2A.

Data connection 5B of Node-B 2B may be dimensioned such that wireless access station 2B is always used as a donor station for providing additional Iub interface capacity for various other (neighbouring) access stations 2A, 2C. User data may then be uni-directionally transmitted from wireless access station 2B to wireless access station 2A, 2C, the latter being receptor stations only.

RNC 3 may comprise a monitoring module 31 configured for monitoring at least the instantaneous data transmission capacity of data connections 5A, 5B (arrow A). Monitoring module 31 may also receive information about the data transmission status of the radio interfaces Uu in each of the cells of the Node-Bs 2A, 2B (arrow B).

Monitoring module 31 reports the monitoring data, or a derivative thereof, to control module 32 that is programmed to control the flow of the user data over data connections 5A, 5B. As an example, if monitoring module 31 detects congestion on data connection 5A, control module 32 may direct a part of the user data for terminal 4 in cell CA over data connection 5B, using data transceiver 33.

In the configuration of FIG. 2, RNC 3 is an appropriate location for the monitoring module 31 since the user data are always transferred via the RNC 3. Consequently, RNC 3 is configured for determining the congestion status of the Iub interfaces of both Node-Bs 2A, 2B. In order for the RNC 3 to make optimum routing decisions for the user data, the routing algorithm may be supplied also with additional information on the data transmission capacities on the respective Uu interfaces, collected by monitoring module 31.

In an exemplary embodiment, monitoring module 31 may detect that while data connection 5B has sufficient capacity, transmission capacity on the radio path of wireless access station 2B is limited (e.g. if wireless access station 2B services mainly terminals at a far distance from the station), and therefore, using the data connection 5C of still another wireless access station 2C would be better.

Of course, system configurations may exist wherein potential Iub capacity donating Node-Bs 2B are controlled by one or more RNCs, different from RNC 3. The RNCs may then be connected to each other in order to share the congestion statuses of the Iub interfaces and/or the Uu interfaces amongst each other. For such configuration, use can be made of the already existing interconnections of the RNCs for mutual communication (used e.g. for soft handover).

For communication systems not having an RNC (FIG. 1B), a controller may be employed in the Node-Bs 2A, 2B. The direct interconnection between the Node-Bs may then also be used for information exchange regarding congestion status of the data connections 5A'- 5C' and/or the radio interface Uu (in E-UTRAN the X2 interface). Another unit in the system, such as controller 8, may also be used for this purpose.

The directional transmission between Node-B 2B and Node-B 2A may be realized by a wired system (not shown) or wirelessly using transmitter 12 and receiving unit 11. Transmitter 12 and receiving unit 11 may establish a point-point radio link. Transmitter 12 may be part of the antenna's of the Node-Bs 2A, 2B used also for data exchange with the user terminals 4 within the respective cells CA, CB. Indeed, it is a reasonable assumption that the availability of data transmission capacity on data connection 5B of Node-B 2B correlates with the availability of data transmission capacity in cell CB.

Receiving unit 11 may have its direction of highest sensitivity directed towards transmitter 12 in order to improve the received signal quality and/or to reduce the power transmitted from transmitter 12 to achieve a given received signal quality. The directionality of the receiving unit may also be realized using beam-steering techniques.

The wireless access stations 2A, 2B may use the same frequency bands (i.e. the frequency spectra used for data transmission) for the respective cells CA, CB in some communication systems (e.g. UMTS communication system 1; LTE communication systems 1'). In such cases, measures should be taken to avoid interference between the intra-cell data traffic and the inter-cell data resulting from the direct transmissions between the wireless access stations. However, also when neighbouring cells CA, CB use different frequency bands, the below measures may be applied.

Another embodiment for reducing interference is using different frequencies for the intra-cell data traffic within cells CA, CB and the interconnection data traffic between stations 2A, 2B. As an example, for downlink communication within cell CA, the uplink frequency band may be used for transmitting data from transmitter 12 to receiving unit 11.

Another embodiment makes use of time multiplexing, wherein transmissions of user data within cell CA and transmission of user data in between stations 2A and 2B are performed at mutually different times.

Another embodiment may be particularly useful for OFDM communication systems and is schematically illustrated in FIGS. 4 and 5. OFDM wireless access stations 2A' and 2B' provide wireless access using a plurality of data carriers within a frequency band. Interference between intra-cell data traffic and inter-cell data traffic may be considerably reduced by assigning a first set I of data carriers for data exchange with user terminals 4 within the cell CA and a second set II of data carriers for the user data traffic from OFDM station 2B' to OFDM station 2A'. The first set I of data carriers comprises a first set of frequencies within the frequency band, illustrated by the black rectangles in FIG. 5. The second set II of data carriers comprises a second set of frequencies within the frequency band, illustrated by the grey rectangles.

In a further embodiment the number of subcarriers available for interconnection data traffic in the second set II may be varied in dependence of the (expected) transmission capacity requirements. The assignment of subcarriers may be performed by a network management module. In order to vary the number of subcarriers dynamically, the network management module may use rules derived from past experience and/or educated guesses as well as (real-time) measurement results from the network.

Of course, the communication system may comprise a plurality of wireless access stations 2A-2C, some or all of them being directly interconnected for user data exchange as described above. In order to reduce interference of the various interconnections, different sets of subcarriers may be used for the respective interconnections.

As mentioned above, the exemplary embodiments apply, mutatis mutandis (i.e. e.g. reversing directions), for uplink communication as well. For uplink communication, a controller is available in the wireless access station in order to direct user data from the user terminal 4 directly from wireless access station 2A to wireless access station 2B in order to use the spare Iub interface transmission capacity of the latter access station. Merging of the user data from data connection 5A and 5B may then take place in a unit of the radio access network, e.g. RNC 3.

It has been found that the interconnection link between the wireless access stations 2A, 2B may have a bit rate in the range of 20-40 Mbps. Furthermore, it has been found that for a communication system having two interconnected access stations 2A, 2B defining 100Mbps cells CA, CB (e.g. OFDM), the Iub interface capacity of data connections 5A, 5B can be reduced by 45%. Higher efficiencies can be obtained using multiple interconnected wireless access stations.

## Claims

1. A communication system comprising a first wireless access station with a first data connection for transferring user data and a second wireless access station with a second data connection for transferring user data, said first wireless access station and said second wireless access station being located at distant positions from each other, wherein
- the first wireless access station comprises one or more antennas for wirelessly transmitting user data, received over said first data connection, to a user terminal; and wherein
- the second wireless access station is configured to receive user data over said second data connection and to transmit said user data directly to said first wireless access station for transmission to said user terminal;
and wherein the communication system further comprises:
- a controller configured for controlling at least a part of said user data for said user terminal to flow over said second data connection.

2. The communication system according to claim 1, wherein said controller is configured for controlling a first part of said user data to flow over said first data connection and a second part of said user data to flow over said second connection and wherein said first wireless access station comprises a merger for merging said first part and said second part of user data for transmission to said user terminal.

3. The communication system according to claim 2, wherein said controller comprises a monitoring module configured for monitoring data traffic on at least said first data connection and for directing said second part of said user data to flow over said second data connection in response to detecting said user data to exceed a data traffic threshold.

4. The communication system according to claim 3, wherein said monitoring module is further configured for monitoring data traffic on said second data connection.

5. The communication system according to one or more of the preceding claims, wherein the first data connection has a first data transfer capacity and the second data connection has a second data transfer capacity, exceeding said first data transfer capacity and wherein said second wireless access station is configured for uni-directionally transmitting said user data to said first wireless access station.

6. The communication system according to one or more of the preceding claims, wherein said second wireless access stations is configured for wireless transmission of said user data to said first wireless access station, using e.g. a point-to-point radio link.

7. The communication system according to claim 6, wherein said second wireless access station comprises one or more antennae for wireless transfer of further user data with a further user terminal and wherein said second wireless access station is further configured for wireless transmission of said user data to said first wireless access station via at least one of said one or more antennae.

8. The communication system according to claim 6 or 7, wherein said first wireless access station comprises at least one receiver antenna configured for having a directional receiving pattern directed to said second wireless access station.

9. The communication system according to one or more of the preceding claims 6-8, wherein said first wireless access station and second wireless access station are orthogonal frequency division multiplexing (OFDM) access stations, wherein said first wireless access station is configured for transmitting said user data to said user terminal using a first subset of sub-carriers in a frequency band and said second wireless access station is configured for transmitting said user data to said first wireless access station using a second subset of sub-carriers, different from said first subset, of said frequency band.

10. The communication system according to claim 9, wherein said system is configured for dynamically varying the number of sub-carriers of said second subset.

11. The communication system according to claim 9 or 10, further comprising a third OFDM access station with a third data connection, said third OFDM access station being configured for transmitting said user data to said first wireless access station using a third subset of subcarriers, different from said first subset and second subset, of said frequency band.

12. The communication system according to one or more of the claims 6-11, wherein said first wireless access station is configured to transmit said user data to said user terminal in a first frequency band and wherein said second wireless access station is configured for transmitting said user data to said first wireless access station using a second frequency band, different from said first frequency band.

13. The communication system according to one or more of the claims 6-12, wherein said first wireless access station is configured to transmit said user data to said user terminal during a succession of first time intervals and wherein said second wireless access station is configured for transmitting said user data to said first wireless access station during a succession of second time intervals, said first and second time intervals alternating with said second time intervals.

14. The communication system according to one or more of the preceding claims, wherein said first and second wireless access stations are Node-B stations of a UMTS communication system and said controller is a remote network controller (RNC) of said UMTS communication system, said remote network controller and Node-B stations communication being configured to transfer said user data over said first and second data connections, respectively.

15. The communication system according to one or more of the claims 1-13, wherein at least one of said first and second wireless access station comprises said controller.

16. The communication system according to one or more of the preceding claims, wherein said controller is configured to receive status information on the available radio capacity for said first and second wireless access stations.

17. The communication system according to one or more of the preceding claims, wherein at least a part of said first data connection comprises a copper-wired connection.

18. The communication system according to one or more of the preceding claims, wherein the first wireless access station is further configured for receiving user data from said user terminal, wherein said first and second data connections are configured for transmitting said user data received from said user terminal and wherein said first wireless access station is further configured for transmitting said user data to said second wireless access station, the system further comprising a controller configured for controlling at least a part of said user data from said user terminal to flow over said second data connection.

19. The communication system according to one or more of the preceding claims, wherein said second wireless access station is further configured for transmitting further information, e.g. handover information, directly to said first wireless access station.

20. The communication system according to one or more of the preceding claims, wherein said first wireless access station and second wireless access station have a distance less than 5 kilometres.

21. A wireless access station comprising one or more antennas for wirelessly transmitting user data to a user terminal and a receiving module arranged for receiving at least a part of said user data directly from a further wireless access station.

22. The wireless access station according to claim 21, wherein said wireless access station is configured for receiving another part of said user data over a data connection and wherein said wireless access station comprises a merger for merging part of said user data received from said further wireless access station and said another part of said user data received over said data connection.

23. A wireless access station being configured to receive user data and further user data over a data connection and comprising a transmitter configured for directly transmitting said further user data to a further wireless access station and one or more antennas for wirelessly transmitting said user data to a user terminal.

24. A controller for use in a communication system comprising a first wireless access station with a first data connection for transferring user data and a second wireless access station with a second data connection for transferring user data, said first wireless access station and said second wireless access station being located at distant positions from each other, wherein
- the first wireless access station comprises one or more antennas for wirelessly transmitting user data, received over said first data connection, to a user terminal; and wherein
- the second wireless access station is configured to receive user data over said second data connection and to transmit said user data directly to said first wireless access station for transmission to said user terminal, wherein the controller is configured for controlling at least a part of said user data for said user terminal to flow over said second data connection.

25. The controller according to claim 24 for use in the communication system according to one or more of the claims 2-20.

26. A method of transmitting user data to a user terminal in a communication system comprising a first wireless access station with a first data connection for transferring user data and a second wireless access station with a second data connection for transferring user data, said first wireless access station and said second wireless access station being located at distant positions from each other, the method comprising the steps of:
- receiving at least a part of said user data over said second data connection at said second wireless access station;
- transmitting said part of said user data from said second wireless access station to said first wireless access station;
- transmitting said part of said user data from said first wireless access station to said user terminal.

27. The method according to claim 26 comprising steps for using the communication system according to one or more of the claims 2-20.
